# EUROPEAN PATENT APPLICATION

(11) **EP 1 365 621 A1**
(43) Date of publication of application: **26.11.2003**
(21) Application number: 03101400.4
(22) Date of filing: 19.05.2003
(51) Int. Cl.: H04Q 7/38, H04L 29/06

(54) **Authentication method and arrangement**

(30) Priority: 24.05.2002 FI 20020982
(71) Applicant: TeliaSonera Oyj, 00510 Helsinki (FI)
(72) Inventor: Keisala, Ilkka, 01600 Vantaa (FI); Vitikka, Ilpo, 00100 Helsinki (FI)
(74) Representative: Antila, Harri Jukka Tapani

(57) **Abstract**

The invention relates to a method and arrangement, with which an operator can provide an authentication service to another operator. The arrangement comprises means (304) for finding the IP address of an authentication operator, means (304, 306, 310) for forwarding the identification information to a network element of the authentication operator comprising a home location register, means (316, 320) for retrieving information required for subscriber authentication to an authentication server, means (310, 312, 314, 316) for transmitting an authentication number to a local network, means (170) for calculating an identification number for the subscriber, means (304, 306, 308, 310, 312, 314) for transmitting the identification number to an authentication server that compares an identification number in its memory with the identification number transmitted from the local network and means (304, 306, 310, 312, 314, 316) for transmitting an authentication approved or rejected message.

## Description

### FIELD

The invention relates to a method and arrangement with which an operator can provide an authentication service to another operator.

### BACKGROUND

In GSM systems (Global System for Mobile communications), the identification and billing of a radio network services subscriber is based on the use of a SIM (Subscriber Identity Module) card. When a subscriber line is opened, the subscriber is provided with a SIM card of the operator. The SIM card contains subscriber information and it can be used for security measures, such as encryption of radio traffic and subscriber information and authentication, by which the access of unregistered users is prevented. The identification module of a UMTS subscriber is called USIM (UMTS subscriber identity module).

Authentication, which refers to the authentication of a subscriber, i.e. verification of rights or reliability, for instance, is typically performed in the GSM networks as follows: the network gives the subscriber a random number RAND that user equipment (or the SIM card in it) uses together with a secret parameter Ki to calculate with an encryption algorithm A3 a new number SRES to transmit to the network. The network also calculates SRES using the known Ki and the same algorithm and compares it with the one calculated in the user equipment. If the SRES numbers are the same, the subscriber is entitled to use the network. The procedure is the same in UMTS networks.

Today, a local network, in which telephone traffic is switched over a radio path, is very often built in limited areas, such as offices or shopping centres. These networks are generally called wireless local area networks WLAN. An operator providing local network services to its customers has to obtain GSM or UMTS network elements, such as HLR (Home Location Register, required in authentication even though it does not need them otherwise. This increases the operator's costs.

### BRIEF DESCRIPTION

It is an object of the invention to implement a method and an apparatus implementing the method in such a manner that a local network operator can obtain authentication services from another operator. This is achieved by the method for subscriber authentication. The method comprising: providing the subscriber with identification information that comprises information on the network of the subscriber, finding the IP address of an authentication operator corresponding to the identification information for transmitting the identification information and an authentication request to an authentication network, forwarding the identification information to the network of the authentication operator, retrieving from a home location register the information required for subscriber authentication, transmitting an authentication number to a local network, calculating an identification number in the identity module of the subscriber, transmitting the identification number to an authentication server of the authentication operator's network that compares an identification number in its memory with the identification number transmitted from the local network, transmitting an authentication approved or rejected message obtained as a result of the comparison to an access controller of the local network.

The invention also relates to an arrangement for subscriber authentication. The arrangement comprises means for finding the IP address of an authentication operator corresponding to identification information for transmitting the identification information and an authentication request to an authentication network; the arrangement comprises means for forwarding the identification information to the network of the authentication operator; the arrangement comprises means for retrieving information required for subscriber authentication to an authentication server; the arrangement comprises means for transmitting an authentication number to a local network; the arrangement comprises means for calculating an identification number for the subscriber; the arrangement comprises means for transmitting the identification number to an authentication server of the authentication operator that compares an identification number in its memory with the identification number transmitted from the local network; the arrangement comprises means for transmitting an authentication approved or rejected message obtained as a result of the comparison to an access controller of the local network.

Preferred embodiments of the invention are set forth in the dependent claims.

The invention is based on the fact that an operator uses the network elements of another operator.

The method and arrangement of the invention make it possible for a WLAN operator to provide an authentication service to a GSM or UMTS network.

### LIST OF FIGURES

The invention will now be described in greater detail by means of preferred embodiments and with reference to the attached drawings, in which
Figure 1 shows an example of a telecommunications system,
Figure 2 is a flow chart,
Figure 3 shows an example of an arrangement for performing authentication.

### DESCRIPTION OF THE EMBODIMENTS

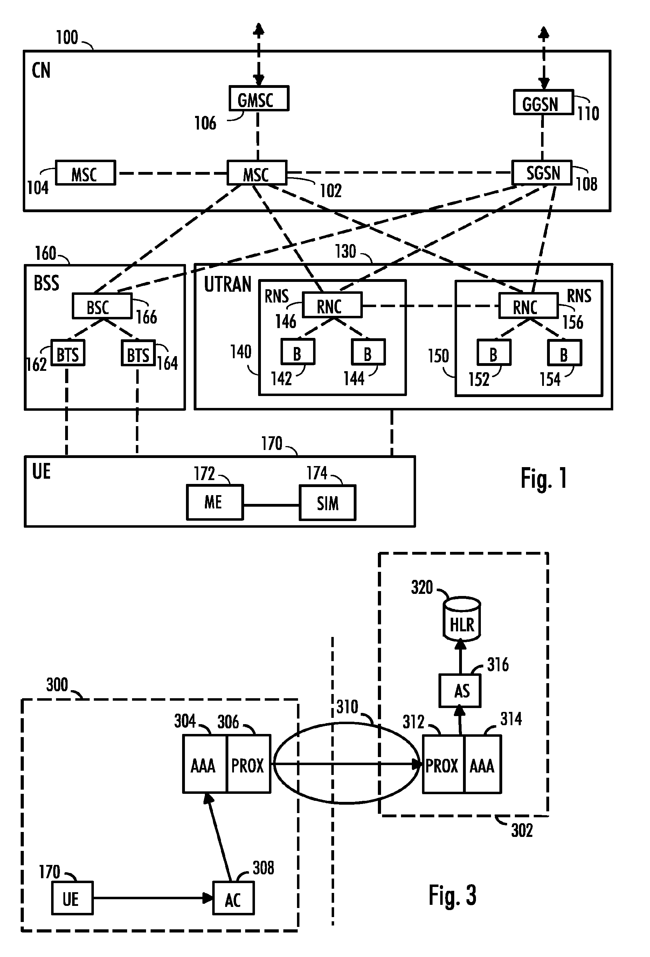

With reference to Figure 1, the following describes the GSM (Global System for Mobile communications) radio system, the EDGE (Enhanced Data Rates for Global Evolution) system that is a radio system based on the GSM system with a higher data transmission rate, and the UMTS (Universal Mobile Telecommunications System) radio system. For the sake of illustration, Figure 1 is simplified and only shows the most important parts of a radio system and the interfaces between them.

The main parts of a radio system are the core network (CN) 100, radio access network 130 and user equipment (UE) 170. The term UTRAN is derived from the words UMTS terrestrial radio access network, i.e. radio access network. The radio access network belongs to the third generation and is implemented by wideband code division multiple access (WCDMA). Figure 1 also shows a base station system 160 that belongs to the 2/2.5 generation and allocates radio resources to different users by time division multiple access (TDMA).

The structure of the core network 100 corresponds to the structure of combined GSM and GPRS systems.

A mobile services switching centre (MSC) 102 serves the base station system 160. The tasks of the mobile services switching centre typically include switching, paging, user equipment location registration, handover management and collecting subscriber accounting information. The number of mobile services switching centres may vary: a small network operator may only have one mobile services switching centre, but large core networks may have several. Figure 1 also shows a second mobile services switching centre 104, but its connections to other network elements are not shown to keep Figure 1 clear.

Large core networks may have a separate gateway mobile services switching centre (GMSC) 106 that takes care of the circuit-switched connections between the core network 100 and external networks. The task of the gateway mobile services switching centre is to take care of the connections between the mobile services switching centres and external networks. An external network can be a public land mobile network (PLMN), a public switched telephone network (PSTN) or the Internet.

The core network typically also comprises other parts, such as a home location register (HLR) containing a permanent subscriber register, a visitor location register (VLR) containing roaming information on user equipment 170 in the area of the mobile services switching centre 102, and if the radio system supports the GPRS system, also a PDP (packet data protocol) address. All parts of the core network are not shown in Figure 1 to keep it illustrative.

A serving GPRS support node (SGSN) 108, in turn, serves the packet-switched side of the core network. The main task of the serving GPRS support node 108 is to transmit to and receive packets from user equipment 170 supporting packet-switched transmission by utilising the base station system 160. The serving GPRS support node 108 contains subscriber information and location information concerning the user equipment 170.

A gateway GPRS support node (GGSN) 110 is the packet-switched side counterpart for the circuit-switched side gateway mobile services switching centre, so it takes care of the traffic between the external networks and the radio network.

The base station system 160 is made up of a base station controller (BSC) 166 and base transceiver stations (BTS) 162, 164. The base station controller 166 controls the base transceiver station 162, 164. In principle, the aim is that devices implementing a radio path including their functions reside in the base transceiver station 162, 164, and control devices reside in the base station controller 166. The implementation method can naturally differ from this principle.

The base station controller 166 generally takes care of the following tasks, for instance: management of base transceiver station 162, 164 radio resources, intercell handovers, frequency management, i.e. the allocation of frequencies to the base transceiver stations 162, 164, management of frequency hopping sequences, measurement of time delays on the uplink, implementation of an interface for operation and maintenance, and power control management.

The base transceiver station contains at least one transceiver that implements one carrier. In the GSM systems, one carrier usually comprises eight time slots, i.e. eight physical channels. One base transceiver station can serve one cell or several sectored cells. The diameter of a cell may vary from a few metres to dozens of kilometres. A base transceiver station is often also considered to contain a transcoder that converts between the speech-coding format used in the radio system and the speech coding format used in the public telephone network. However, in practice, the transcoder usually physically resides in the mobile services switching centre. The tasks of the base transceiver station include timing advance calculation, uplink measurements, channel coding, encryption, decryption and frequency hopping.

The radio access network 130 is made up of radio network subsystems 140, 150. Each radio network subsystem is made up of a radio network controller (RNC) 146, 156 and B nodes 142, 144, 152, 154. Instead of the B node concept, the term base station is often also used. It can be said that in functionality, the radio network controller corresponds to the base station controller of the GSM system and the B node the base transceiver station of the GSM system. Solutions also exist, in which it is possible to implement both a TDMA interface and a WCDMA radio interface with the same device simultaneously.

The user equipment 170 comprises mobile equipment (ME) 172 and a subscriber identity module (SIM) or UMTS subscriber identity module (USIM) 174. The user equipment can contain one or more different subscriber identity modules depending on the number of networks with different standards the equipment is to operate. The user equipment contains at least one transceiver and an antenna, user interface and battery. There are many types of user equipment: car-installed or portable. The same features as in personal or portable computers are also implemented in user equipment.

Additional information on radio telecommunications systems is found in the literature and standards of the field.

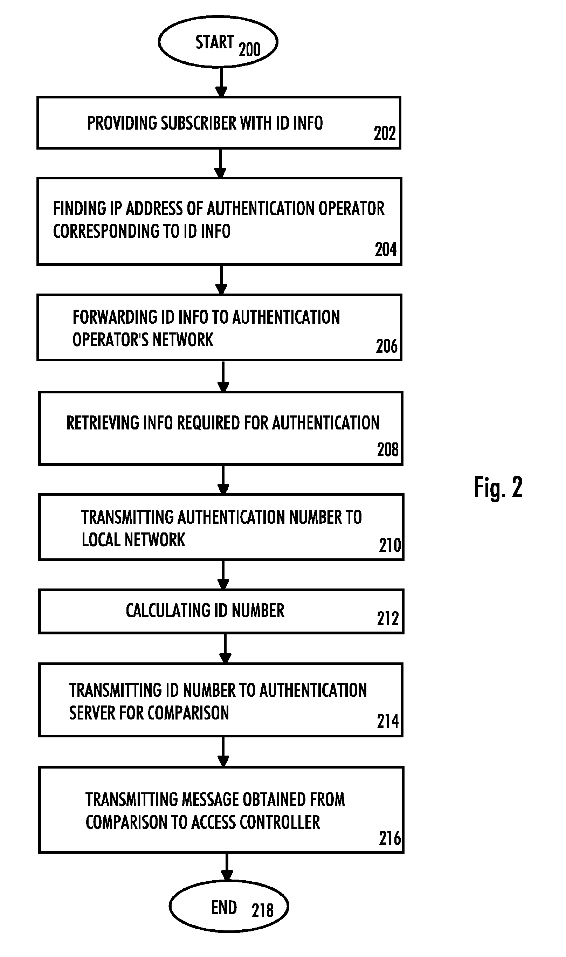

Next, one preferred embodiment of a method, with which an operator can provide an authentication service to another operator, is described using the flow chart of Figure 2. A local network operator can have a WLAN network, for instance, and it buys GSM authentication services for its customers from a GSM operator. The operator, from which the authentication services are bought, is called an authentication operator herein. WLAN networks refer to wireless local area networks that can be implemented using different standards. The standard of the wireless local area network bears no significance to the invention, so it is not described in more detail herein. Additional information on WLAN networks is found in the literature and standards of the field.

The execution of the method starts in block 200.

In block 202, a subscriber is provided with identification information that comprises information on the subscriber's network. The identification information can be IMSI (International Mobile Subscriber Identity) or a character string attached to it or a combination thereof. IMSI comprises at least a mobile country code (MCC), mobile network code (MNC) and mobile subscriber identification number (MSIN). The character string attached to IMSI can for instance be a realm character string suitable for the purpose. Realm character strings are generally used in the Internet to group users for authentication and authorization. IMSI is typically stored in the subscriber identity module, i.e. SIM (GSM) or USIM (UMTS) card, for instance. The operator selling authentication services, i.e. in this case the GSM or UMTS operator, hands over the SIM or USIM card to the local network operator. Identification information typically indicates where the identification information is to be transmitted.

It should be noted that the authentication operator, i.e. the operator selling authentication services, initializes the identity modules and the local network operator defines identification information pools or groups, for instance realms. The authentication operator can sell authentication services by means of identity modules and the local operator can define different subscribers by means of identification information pools or groups to the networks of different operators for authentication.

In block 204, the IP (Internet protocol) address of the authentication operator corresponding to the identification information is found for transmitting the identification information and an authentication request to the authentication network. The identification information typically indicates where it should be transmitted.

In block 206, the identification information and authentication request are transmitted to the IP address in question through an AAA server of the local network. An AAA server refers to a server that takes care of authentication, authorization and accounting. Examples of AAA servers are a RADIUS (Remote Authentication for Dial-In User Service) server and Diameter server. The identification information and authentication request can be combined into one term or transmitted as separate terms. The AAA server of the local network transmits the identification information on to the AAA server of the authentication operator.

In block 208, information required in subscriber authentication is retrieved from the home location register; the information is usually a triplet that comprises a random number RAND, secret parameter Kc and SRES number. Generally, the authentication server performs the above action. The secret parameter Kc, which is related to encryption, is not actually needed in authentication.

The information of all users is stored in the home location register (HLR). The home location register contains the following, for instance: subscriber's IMSI, mobile subscriber's International ISDN number MSISDN (Mobile Subscriber Integrated Services Digital Network), authentication key Ki, information on subscriber's supplementary services, and the location of the subscriber's current visitor location register (VLR).

Next, in block 210, the authentication number, i.e. RAND, for instance, is transmitted through the Internet to the local network.

In block 212, the subscriber's identity module (SIM or USIM card) calculates the identification number (SRES) by using an algorithm A3, authentication number RAND and secret authentication parameter Ki.

In block 214, the identification number is transmitted to the authentication server of the authentication operator that compares the identification number received from HLR with the identification number calculated in the subscriber's identity module. In block 216, an authentication approved or rejected message obtained as a result of the comparison is transmitted to the access controller of the local network. If the identification numbers are the same, an approval message is transmitted, and if they are different, the authentication request is rejected.

The method ends in block 218. The method is typically implemented by software supported by the necessary hardware.

The billing of the customer can be done by RADIUS Accounting Start and Accounting Stop messages created in the AAA server of the local network. The billing information can also be transmitted to a GSM network, for instance. In such a case, an accounting start command is transmitted to the AAA server of the local network after the subscriber has been granted access to the network, i.e. when a call or data transmission begins. The accounting start command can be transmitted on to the authentication server. An accounting stop command is transmitted in the same manner after the call or data transmission ends. Billing is typically based on the time elapsed or data transmitted between the accounting start and stop commands. Another possible billing method is pricing the service according to the number of performed actions, for instance.

Next, the arrangement for subscriber authentication and billing is described by means of the example in Figure 3. The example of Figure 3 shows part of a radio system 302 according to the GSM system and one possible local network 300. The network of the authentication operator can also be according to some other standard. The local network operator buys the necessary authentication services from another operator. The local network operator can have a WLAN network, for instance, and it buys GSM authentication services for its customers from a GSM operator. WLAN networks refer to wireless local area networks implemented by various standards. The standard of the wireless local area network bears no significance to the invention, so it is not described in more detail herein. Additional information on WLAN networks is found in the literature and standards of the field.

In Figure 3, the user equipment 170 wants authentication for a local network by using a subscriber identity module 174, and the equipment transmits an authentication request to the network. The authentication request is forwarded to an AAA server 304, which can be RADIUS, for instance, through an access controller 308. The access controller 308 can be a separate device or it can be a functional part of another network element, such as a base transceiver station. The RADIUS client can reside in the access controller, base transceiver station or radio network controller.

The access controller 308 is a gateway between the Internet and the user equipment of a local network. Among other things, the access controller controls data coming through and transmitted to the Internet. The access controller also collects billing information, such as used network time and amount of transmitted data.

The subscriber is provided with identification information that indicates that the subscriber is a user of the local network. The identification information can be IMSI (International Mobile Subscriber Identity) or a character string attached to it or a combination thereof. IMSI comprises at least a mobile country code (MCC), mobile network code (MNC) and mobile subscriber identification number (MSIN). The character string attached to IMSI can for instance be a realm character string suitable for the purpose. Realm character strings are generally used in the Internet to group users for authentication and authorization. IMSI is typically stored in the subscriber identity module, i.e. SIM (GSM) or USIM (UMTS) card, for instance. The operator selling authentication services, i.e. in this case the GSM or UMTS operator, hands over the SIM or USIM card to the local network operator. Identification information typically indicates where the identification information is to be transmitted.

The AAA server 304 finds the IP (Internet Protocol) address of the authentication operator corresponding to the identification information and transmits the identification information and an authentication request to the IP address in question. AAA server refers to a server that takes care of authentication, authorization and accounting. Examples of AAA servers are the RADIUS (Remote Authentication for Dial-In User Service) server and Diameter server. The identification information and authentication request can be combined into one term or transmitted as separate terms. The identification information is transmitted to an AAA server 314 of the network for which authentication is requested. The AAA server of the local network comprises or is connected to a proxy server 306 that transmits traffic over the Internet 310.

Between the AAA server 314 of the authentication network and the Internet, there is a proxy server 312 connected to the AAA server of the authentication network. The AAA server 314 of the authentication operator forwards the IMSI parameter to an authentication server 316.

The authentication server 316 provides authentication services of the GSM system to other systems. It provides SIM-based authentication and billing services to the access controller, which in this example belongs to the local network.

The information required for subscriber authentication is retrieved from a home location register 320; the information being a triplet comprising a random number RAND, secret parameter Kc and SRES number.

Authentication is typically performed as follows: the network provides the random number RAND to the subscriber, the user equipment calculates using a secret parameter Ki and an encryption algorithm A3 a new number SRES that is transmitted to the network. The network also calculates SRES and compares it with the one calculated by the user equipment. If the SRES numbers are the same, the subscriber is entitled to use the network.

The triplet is returned to the authentication server 316 that transmits the RAND number through the AAA server 314 and proxy server 312 of the authentication network to the Internet 310 and from there on through the proxy server 306 and the AAA server 304 of the local network to the access controller 308. The access controller transmits the RAND number on to the user equipment 170, the identity module of which calculates the SRES number.

The calculated SRES number is transmitted to the authentication server 316 through the access controller 308, AAA servers 304, 314 and proxy servers 306, 312. The authentication server compares the SRES numbers calculated in the GSM network (HLR) and user equipment with each other. On the basis of the comparison, the authentication server either approves or rejects the subscriber authentication and transmits a message accordingly to the access controller.

The billing of the customer can be done by RADIUS Accounting Start and Accounting Stop messages created in the access controller 308 of the local network. The billing information can also be transmitted to the GSM network, for instance. The messages are then transmitted to a GSM network through an Internet connection. The authentication server 316 can also generate GSM billing information.

If billing is done in the manner described above, the access controller 308 transmits an accounting start command to the AAA server 304 of the local network through the proxy server 306 after the subscriber has been granted access to the network, i.e. when a call or data transmission begins. The accounting start command is taken through the Internet 310 to the AAA server 312, 314 of the authentication network and from there on to the authentication server 316. An accounting stop command is transmitted in the same manner from one network element to another after the call or data transmission ends. Billing is typically based on the time elapsed or data transmitted between the accounting start and stop commands. Another possible billing method is pricing the service according to the number of performed actions, for instance.

The arrangement is typically implemented in such a manner that the network elements have software to execute the required functions. The arrangement can also have memory elements for storing information.

Even though the invention has been explained in the above with reference to an example in accordance with the accompanying drawings, it is apparent that the invention is not restricted to it but can be modified in many ways within the scope of the inventive idea disclosed in the attached claims.

## Claims

1. A method for subscriber authentication in a telecommunications system comprising a network of a local network operator, i.e. local network, and a network of an authentication operator, i.e. authentication network, **characterized by**:
(202) providing a subscriber with identification information that comprises information on the network of the subscriber,
(204) finding the IP address of an authentication operator corresponding to the identification information for transmitting the identification information and an authentication request to an authentication network,
(206) forwarding the identification information to the authentication network,
(208) retrieving from a home location register of the authentication network the information required for subscriber authentication that comprises an authentication number,
(210) transmitting the authentication number to the local network,
(212) calculating an identification number by means of the authentication number in an identity module of the subscriber,
(214) transmitting the identification number to an authentication server of the authentication operator's network that compares an identification number in its memory with the identification number calculated in the identity module of the subscriber,
(216) transmitting an authentication approved or rejected message obtained as a result of the comparison to an access controller of the local network.

2. A method as claimed in claim 1, **characterized in that** the identification information is IMSI, a character string (realm) attached to IMSI or a combination thereof.

3. A method as claimed in claim 1, **characterized in that** the information required for authentication comprises a RAND number and an SRES number.

4. A method as claimed in claim 1, **characterized in that** the identity module is a SIM card or a USIM card.

5. A method as claimed in claim 1, **characterized in that** the AAA server of the authentication network is a RADIUS server.

6. A method as claimed in claim 1, **characterized in that** the AAA server of the authentication network is a Diameter server.

7. An arrangement for subscriber authentication in a telecommunications system comprising a network of a local network operator, i.e. local network, and a network of an authentication operator, i.e. authentication network, **characterized in that**
the arrangement comprises means (304) for finding the IP address of an authentication operator corresponding to identification information for transmitting the identification information and an authentication request to an authentication network;
the arrangement comprises means (304, 306, 310) for forwarding the identification information to the network of the authentication operator;
the arrangement comprises means (316, 320) for retrieving information required for subscriber authentication and comprising an authentication number from the home location register of the authentication network;
the arrangement comprises means (310, 312, 314, 316) for transmitting the authentication number to the local network;
the arrangement comprises means (170) for calculating an identification number for the subscriber by means of the authentication number;
the arrangement comprises means (304, 306, 308, 310, 312, 314) for transmitting the identification number to the authentication server of the authentication operator's network that compares an identification number in its memory with the identification number calculated in the subscriber identity module;
the arrangement comprises means (304, 306, 310, 312, 314, 316) for transmitting an authentication approved or rejected message obtained as a result of the comparison to an access controller of the local network.

8. An arrangement as claimed in claim 9, **characterized in that** the identification information is IMSI, a character string (realm) attached to IMSI or a combination thereof.

9. An arrangement as claimed in claim 9, **characterized in that** the information required for authentication comprises a RAND number and an SRES product.

10. An arrangement as claimed in claim 9, **characterized in that** the means for calculating the subscriber's identification number in the user equipment is an identity module.

11. An arrangement as claimed in claim 9, **characterized in that** the AAA server of the authentication network is a RADIUS server.

12. An arrangement as claimed in claim 9, **characterized in that** the AAA server of the authentication network is a Diameter server.
